# EUROPEAN PATENT APPLICATION

(11) **EP 3 393 158 A1**
(43) Date of publication of application: **24.10.2018**
(21) Application number: 16891307.7
(22) Date of filing: 29.12.2016
(51) Int. Cl.: H04W 8/06, H04W 8/26, H04L 29/06

(54) **DATA TRANSMISSION METHOD, NETWORK EQUIPMENT AND TERMINAL**

(30) Priority: 26.02.2016 CN 201610110633
(71) Applicant: Huawei Technologies Co., Ltd., Longgang District Shenzhen, Guangdong 518129 (CN)
(72) Inventor: XIE, Yong, Shenzhen Guangdong 518129 (CN); ZENG, Guangzhu, Shenzhen Guangdong 518129 (CN)
(74) Representative: Maiwald Patent- und Rechtsanwaltsgesellschaft mbH
(86) International application number: PCT/CN2016/113158
(87) International publication number: WO 2017/143859

(57) **Abstract**

The present invention relates to a data transmission method, a network device, and a terminal, and pertains to the field of communications technologies. In the present invention, a query request sent by a second terminal is received; address information of a first terminal is obtained from a pre-stored correspondence among a terminal identifier, an application identifier, and address information based on the terminal identifier of the first terminal and an application identifier of an application; and the address information of the first terminal is sent to the second terminal. The query request that is sent by the second terminal and that carries the terminal identifier of the first terminal and the application identifier is received, and the address information of the first terminal is determined and returned based on the pre-stored correspondence among a terminal identifier, an application identifier, and address information, so that the second terminal can directly send data to the first terminal based on the address information of the first terminal, so as to avoid a handshake procedure that is often required between the second terminal and an application server, thereby reducing network signaling load.

## Description

This application claims priority to Chinese Patent Application No. 201610110633.7, filed with the Chinese Patent Office on February 26, 2016 and entitled "DATA TRANSMISSION METHOD, NETWORK DEVICE, AND TERMINAL", which is incorporated herein by reference in its entirety.

### TECHNICAL FIELD

The present invention relates to the field of communications technologies, and in particular, to a data transmission method, a network device, and a terminal.

### BACKGROUND

With rapid development of communications technologies, a mobile communications service gradually becomes the mainstream. A mobile communications network mainly includes a circuit switched domain and a packet switched domain. The circuit switched domain is usually used to transmit a voice service, and the packet switched domain is usually used to transmit a data service. When a terminal performs data service communication, a gateway device in the packet switched domain assigns an IP (Internet Protocol, Internet Protocol) address to the terminal. However, because terminals cannot obtain IP addresses of each other, they cannot directly establish a data communication connection. Generally, data transmission between the terminals requires an application server. In other words, a terminal side enables a network application, and sends data to the application server; and the application server forwards the data to a communication peer based on pre-stored account information of the communication peer.

In the data transmission manner provided above, because in a data transmission process, the application server is required to forward the data, the terminal and the application server often need to perform a handshake procedure to maintain a communication connection. This brings heavy network signaling load.

### SUMMARY

Embodiments of the present invention provide a data transmission method, a network device, and a terminal, so as to avoid a handshake procedure between the terminal and an application server, thereby reducing network signaling load.

According to a first aspect of the embodiments of the present invention, a data transmission method is provided. A network device receives a query request sent by a second terminal, can obtain address information of a first terminal through querying or the like from a pre-stored correspondence among a terminal identifier, an application identifier, and address information based on a terminal identifier of the first terminal and an application identifier of an application to perform communication that are carried in the query request, and sends the obtained address information of the first terminal to the second terminal, so that after receiving the address information of the first terminal, the second terminal can perform direct data communication with the second terminal by using the address information, so as to avoid a handshake procedure that is often required between the second terminal and an application server, thereby reducing network signaling load.

Further, the first terminal needs to perform an address registration procedure on the network device, so that when receiving an address registration request, the network device establishes and saves a correspondence among the address information of the first terminal, the application identifier of the application, and the terminal identifier of the first terminal based on the address information of the first terminal, the application identifier of the application, and the terminal identifier of the first terminal that are carried in the address registration request. In this way, a relatively convenient query manner may be provided, so as to provide a basis for a subsequent address query.

In the foregoing registration procedure, the first terminal may perform registration by itself, or another device may perform registration instead of the first terminal. Therefore, the network device may receive the address registration request in any one of the following manners, for example, receive an address registration request sent by the first terminal; or receive an address registration request sent by a mobility management entity MME; or receive an address registration request sent by a gateway device. With the plurality of different registration manners, registration flexibility is greatly improved, and air interface signaling overheads can be further reduced when the MME replaces the first terminal to perform address registration.

In a scenario in which the network device is an HSS, when the query request is sent to the network device, the query request may be sent to a mobility management entity MME or a serving general packet radio service GPRS support node SGSN to which the second terminal belongs. The MME or the SGSN determines, based on the terminal identifier of the first terminal that is carried in the query request, an HSS to which the first terminal belongs, and forwards the query request to the HSS to which the first terminal belongs. In this procedure, the second terminal can still obtain the address information of the first terminal through querying even if the first terminal is in a roaming state, thereby improving address query reliability.

It should be noted that the network device includes a home subscriber server HSS, a gateway device, or a specified management device provided by a third party, so as to provide a more flexible query manner. In addition, the above-mentioned terminal identifier may be an identifier used to uniquely identify one terminal, such as a phone number of the terminal or a virtual device identifier.

According to a third aspect of the embodiments of the present invention, a network device is provided. The network device includes a transmitter, a receiver, a memory, and a processor separately connected to the transmitter, the receiver, and the memory, and the network device is configured to implement the data transmission method provided in the embodiments of the present invention.

According to a fourth aspect of the embodiments of the present invention, a terminal is provided. The terminal includes a transmitter, a receiver, a memory, and a processor separately connected to the transmitter, the receiver, and the memory, and the terminal is configured to implement the data transmission method provided in the embodiments of the present invention.

According to a fifth aspect of the embodiments of the present invention, a data transmission apparatus is provided. The apparatus is applied to a network device, and includes: a receiving module, configured to receive a query request sent by a second terminal, where the query request carries at least a terminal identifier of a first terminal and an application identifier of an application to perform communication; an obtaining module, configured to obtain address information of the first terminal from a pre-stored correspondence among a terminal identifier, an application identifier, and address information based on the terminal identifier of the first terminal and the application identifier of the application; and a sending module, configured to send the address information of the first terminal to the second terminal, where the address information of the first terminal is used by the second terminal to send data to the first terminal. The apparatus provided above receives the query request that is sent by the second terminal and that carries the terminal identifier of the first terminal and the application identifier, and determines and returns the address information of the first terminal based on the pre-stored correspondence among a terminal identifier, an application identifier, and address information, so that the second terminal can directly send the data to the first terminal based on the address information of the first terminal, so as to avoid a handshake procedure that is often required between the second terminal and an application server, thereby reducing network signaling load.

In a first possible implementation of the fifth aspect of the embodiments of the present invention, the receiving module is further configured to receive an address registration request, where the address registration request carries the address information of the first terminal, the application identifier of the application, and the terminal identifier of the first terminal; and the apparatus further includes an establishment module, configured to establish and save a correspondence among the address information of the first terminal, the application identifier of the application, and the terminal identifier of the first terminal. When receiving the registration request for the first terminal, the apparatus provided above correspondingly stores the address information of the first terminal, the application identifier of the application, and the terminal identifier of the first terminal, so as to ensure that when the query request of the second terminal is received, the address information of the first terminal can be obtained based on the terminal identifier and the application identifier of the application to perform communication that are carried in the query request.

With reference to the fifth aspect and the first possible implementation of the fifth aspect of the embodiments of the present invention, in a second possible implementation, the receiving module is configured to: receive an address registration request sent by the first terminal; or receive an address registration request sent by a mobility management entity MME; or receive an address registration request sent by a gateway device. According to the apparatus provided above, the first terminal may perform address registration, the MME may replace the first terminal to perform address registration, or the gateway device may perform address registration. Therefore, address registration manners are increased. In addition, air interface signaling overheads can be reduced when the MME replaces the first terminal to perform address registration.

According to a sixth aspect of the embodiments of the present invention, a data transmission apparatus is provided. The apparatus is applied to a second terminal, and includes: a sending module, configured to send a query request to a network device, where the query request carries a terminal identifier of a first terminal and an application identifier of an application to perform communication; and a receiving module, configured to receive address information of the first terminal, where the address information of the first terminal is obtained by the network device based on the terminal identifier of the first terminal and the application identifier of the application, where the sending module is further configured to send data to the first terminal based on the address information of the first terminal. The apparatus provided above sends, to the network device, the query request that carries the terminal identifier of the first terminal and the application identifier, so that the network device determines and returns the address information of the first terminal based on a pre-stored correspondence among a terminal identifier, an application identifier, and address information, and the apparatus can directly send the data to the first terminal based on the address information of the first terminal, so as to avoid a handshake procedure that is often required between the apparatus and an application server, thereby reducing network signaling load.

In a first possible implementation of the sixth aspect of the embodiments of the present invention, the network device includes a home subscriber server HSS, a gateway device, or a specified management device provided by a third party. The address information of the first terminal can be queried by using the foregoing three different network devices, thereby increasing ways of querying the address information of the first terminal.

With reference to the sixth aspect and the first possible implementation of the sixth aspect of the embodiments of the present invention, in a second possible implementation, the sending module is configured to: when the network device is an HSS, send the query request to a mobility management entity MME or a serving general packet radio service GPRS support node SGSN to which the second terminal belongs, where the MME or the SGSN determines, based on the terminal identifier of the first terminal that is carried in the query request, an HSS to which the first terminal belongs, and forwards the query request to the HSS to which the first terminal belongs. According to the apparatus provided above, when the first terminal is in a roaming state, the second terminal may determine, based on the terminal identifier of the first terminal by using the MME or the SGSN to which the second terminal belongs, an address of the HSS to which the first terminal belongs, and routes, by using the MME or the SGSN, the query request to the HSS to which the first terminal belongs, so that the HSS to which the first terminal belongs obtains and returns the address information of the first terminal, so as to ensure that the second terminal can still obtain the address information of the first terminal through querying even if the first terminal is in the roaming state, thereby improving address query reliability.

With reference to the sixth aspect and the first possible implementation of the sixth aspect of the embodiments of the present invention, in a third possible implementation, the sending module is configured to: when the network device is a gateway device, send the query request to an MME or an SGSN to which the second terminal belongs, where the MME or the SGSN determines, based on the terminal identifier of the first terminal that is carried in the query request, a gateway device to which the first terminal belongs, and forwards the query request to the gateway device to which the first terminal belongs. According to the apparatus provided above, when the first terminal is in a roaming state, the second terminal may determine, based on the terminal identifier of the first terminal by using the MME or the SGSN to which the second terminal belongs, an address of the gateway device to which the first terminal belongs, and routes, by using the MME or the SGSN, the query request to the gateway device to which the first terminal belongs, so that the gateway device to which the first terminal belongs obtains and returns the address information of the first terminal, so as to ensure that the second terminal can still obtain the address information of the first terminal through querying even if the first terminal is in the roaming state, thereby improving address query reliability.

In an example embodiment, a non-transitory computer readable storage medium is further provided. When an instruction in the storage medium is executed by a processor of a terminal, the terminal can perform any one of the foregoing data transmission methods.

In an example embodiment, a non-transitory computer readable storage medium is further provided. When an instruction in the storage medium is executed by a processor of a network device, the network device can perform any one of the foregoing data transmission methods.

It should be understood that the foregoing general description and the following detailed description are merely examples and explanations, and cannot limit the present invention.

### BRIEF DESCRIPTION OF DRAWINGS

The accompanying drawings herein are incorporated in the specification, become a part of the specification, show embodiments that are in accordance with the present invention, and are used with the specification to explain a principle of the present invention.
FIG. 1A is a flowchart of a data transmission method according to an example embodiment;
FIG. IB is a flowchart of a data transmission method according to the embodiment in FIG. 1A;
FIG. 1C is a flowchart of a data transmission method according to the embodiment in FIG. 1A;
FIG. ID is a flowchart of a data transmission method according to the embodiment in FIG. 1A;
FIG. 2 is a block diagram of a data transmission apparatus according to an example embodiment;
FIG. 3A is a block diagram of a data transmission apparatus according to another example embodiment;
FIG. 3B is a block diagram of a data transmission apparatus according to another example embodiment;
FIG. 4 is a block diagram of a terminal 400 according to an example embodiment; and
FIG. 5 is a block diagram of a network device according to an example embodiment.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with the present invention. On the contrary, they are only examples of apparatuses and methods that are described in the appended claims in detail and that are consistent with some aspects of the present invention.

Generally, an IP address of a terminal is dynamically assigned and is not fixed. For example, each time the terminal accesses a mobile communications network, a gateway device re-assigns an IP address to the terminal. Therefore, users cannot learn of IP address information of each other, and terminals cannot directly transmit data, either. However, because a terminal identifier of a terminal used by a user, such as a phone number is usually fixed, terminals may learn of terminal identifiers of each other. In addition, the terminal may obtain an application identifier of an application to be communicated on the terminal. Therefore, in the method provided in the embodiments of the present invention, a second terminal queries, on a network device, address information of a first terminal based on a terminal identifier of the first terminal and an application identifier of an application, and may directly establish a communication connection to the first terminal by using the address information of the first terminal.

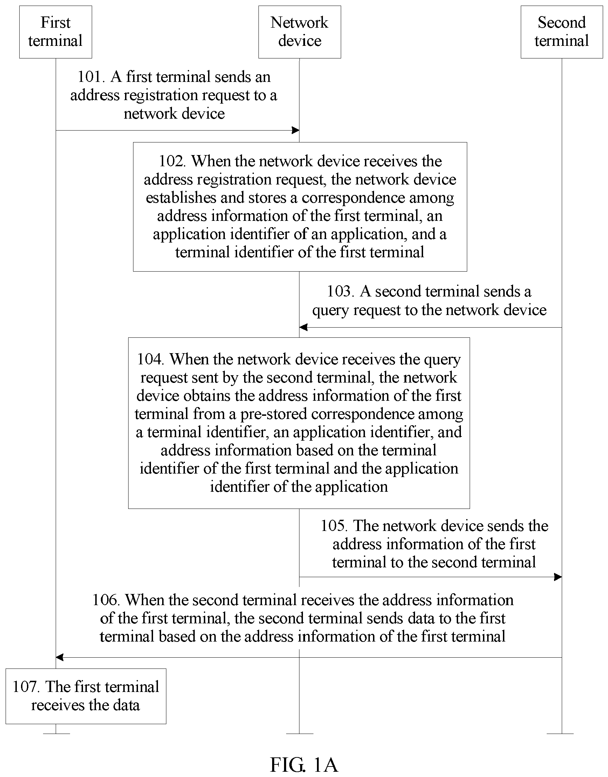

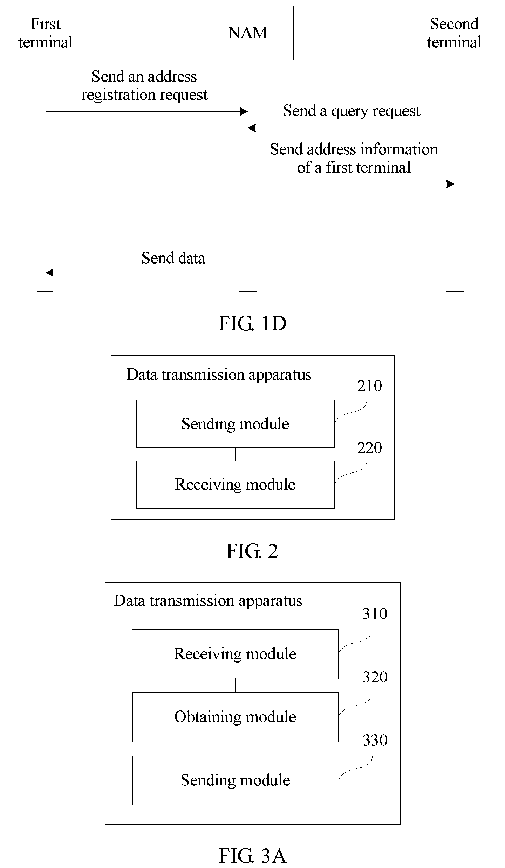

FIG. 1A is a flowchart of a data transmission method according to an example embodiment. In this embodiment, an example in which a terminal interacts with a network device is used for description. The data transmission method may include the following steps.

101. A first terminal sends an address registration request to the network device, where the address registration request carries address information of the first terminal, an application identifier of an application, and a terminal identifier of the first terminal.

The application identifier is used to uniquely identify one application. Only applications of a same type can transmit data with each other, for example, a Facebook (Facebook) application can transmit data only with a Facebook application, and cannot transmit data with another application. Therefore, in this embodiment, applications to be communicated on the terminal are a same application. The terminal identifier may be used to uniquely identify the terminal, for example, a mobile number of the terminal or a device identifier of the terminal.

The network device includes an HSS (Home Subscriber Server, home subscriber server), a gateway device, or a specified management device provided by a third party.

The HSS is usually configured to store user information of the terminal, for example, may be configured to store a terminal identifier of a user, such as a phone number, a SIM card identifier, and another terminal identifier. It should be noted that only a 4G (The Fourth Generation Mobile Communication, 4^{th} Generation mobile communication) network herein is used as an example. The method provided in this embodiment may be further applied to another mobile communications network, for example, a 3G (Third Generation, 3^{rd} Generation) network. In the 3G network, a network device having the same function is an HLR (Home Location Register, home location register), and a working principle of the HLR is similar to that of the HSS. Details are not described herein.

The gateway device may be mainly configured to assign an IP address and a port number to the terminal. In different mobile communications networks, corresponding gateway devices are also different. For example, in a 3G network, the gateway device may refer to a GGSN (Gateway GPRS (General Packet Radio Service, general packet radio service) Support Node, a gateway GPRS support node), and in a 4G network, the gateway device refers to a PGW (Packet Data Network Gateway, packet data network gateway) or the like.

The specified management device provided by the third party may be a device that is provided by the third party and that is specially configured to manage an address. For example, the specified management device may be referred to as a NAM (Network Address Manager, network address manager).

Before performing querying, a second terminal needs to register related information about the first terminal in the network device, that is, register a correspondence among the address information of the first terminal, the application identifier of the application, and the terminal identifier of the first terminal, so that the second terminal can obtain the address information of the first terminal through querying by using the network device.

In an actual application process, a plurality of applications may run on the first terminal, and different applications occupy different port numbers. When transmitted data arrives, the first terminal needs to distribute the data to the different applications by using the different port numbers. Therefore, in this embodiment, during address registration, the address information of the first terminal includes information that may be used for direct communication, for example, IP address information of the first terminal and a port number of the first terminal, so as to accurately implement data transmission.

Specifically, a port number of an application on the first terminal may be obtained in the following process: When a specified operation on the application is detected, the first terminal sends a port registration request to the gateway device, where the port registration request carries an application identifier of the application, the gateway device assigns a port number to the application identifier, and the gateway device sends the assigned port number to the first terminal. Certainly, the port number may be further obtained from configuration information of the application. This is not specifically limited in this embodiment of the present invention. The specified operation may be an operation of enabling the application, or certainly may be an operation of registering an application account. This is not specifically limited in this embodiment of the present invention.

102. When the network device receives the address registration request, the network device establishes and saves a correspondence among the address information of the first terminal, the application identifier of the application, and the terminal identifier of the first terminal.

Specifically, different devices may implement a registration process of the first terminal, for example, in any one of the following possible implementations:

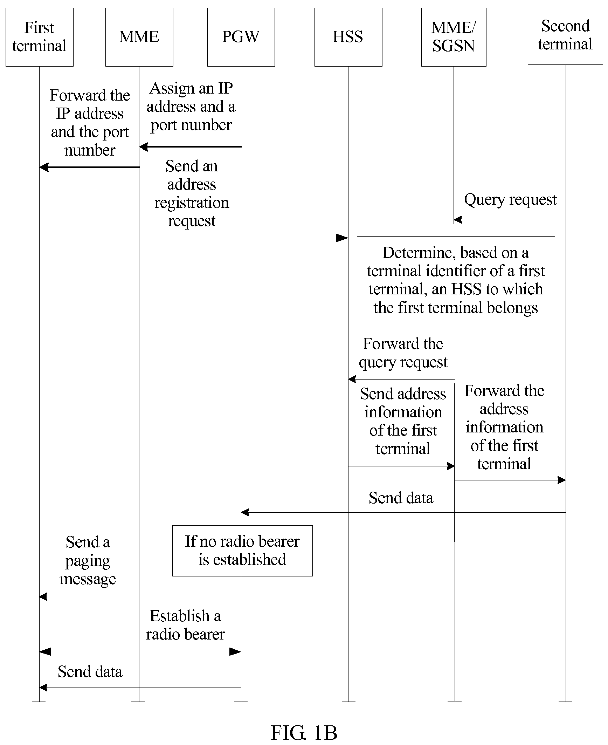

In a first possible implementation, an MME replaces the first terminal to perform registration in the network device, in other words, the network device receives an address registration request sent by the MME. Because the IP address and the port number that are assigned by the gateway device to the first terminal need to be forwarded by the MME, the MME may also obtain the IP address and the port number. Therefore, air interface signaling overheads can be greatly reduced when the MME replaces the first terminal to perform the process. Specifically, when the MME forwards the IP address and the port number to the first terminal, the MME generates the address registration request based on the IP address and the port number, and sends the address registration request to the network device. In this case, the network device may be an HSS or a gateway device. For example, referring to FIG. 1B, the network device is an HSS. The MME forwards, to the first terminal, the IP address and the port number that are assigned by the PGW, and sends the address registration request to the HSS.

In a second possible implementation, the gateway device replaces the first terminal to perform registration in the network device, in other words, the network device receives an address registration request sent by the gateway device. In this case, if the network device is an HSS, after assigning the IP address and the port number to the first terminal, the gateway device generates the address registration request based on the IP address and the port number, and sends the address registration request to the HSS. Optionally, the network device may be further a gateway device. In other words, after assigning the IP address and the port number to the first terminal, the gateway device may further correspondingly store the IP address and the port number, so as to implement address registration of the first terminal.

After receiving the address registration request, the network device obtains, from the address registration request, the address information of the first terminal, the application identifier of the application to be communicated on the second terminal, and the terminal identifier. To obtain the address information of the first terminal through querying by using the terminal identifier of the first terminal and the application identifier, the network device correspondingly stores the information about the first terminal, the application identifier, and the terminal identifier of the first terminal, and may use the terminal identifier of the first terminal and the application identifier as indexes during querying.

For example, if the IP address of the first terminal is 192.168.1.24, the port number is 8021, the application identifier of the application to perform communication is APP 1, and the terminal identifier is a phone number 189XXXX0520, the correspondence among the address information of the first terminal, the application identifier, and the terminal identifier of the first terminal may be represented in Table 1 below.

**Table 1**

| **Phone number** | **Application identifier** | **Address information** | |
|---|---|---|---|
| 189XXXX0520 | APP 1 | IP address | Port number |
| | | 192.168.1.24 | 8021 |
| ... | ... | ... | |

Certainly, it should be noted that the foregoing representation manner is merely an example. The correspondence among the address information of the first terminal, the application identifier of the application to perform communication, and the terminal identifier of the first terminal may be further represented in another manner. For example, the application identifier, the IP address, and/or the port number are/is stored through numbering or encoding. This is not specifically limited in the present invention.

It should be noted that the address registration process of the first terminal in step 101 and step 102 only needs to be performed before a query process in step 103, and registration is not always required before each query. Optionally, when the address information of the first terminal changes, the foregoing address registration process needs to be performed.

103. A second terminal sends a query request to the network device, where the query request carries the terminal identifier of the first terminal and an application identifier of an application to perform communication.

If the second terminal needs to directly transmit data with the first terminal, the second terminal needs to learn of the address information of the first terminal. Therefore, the second terminal may send the query request to the network device specifically by using any one of the following possible implementations:

In a first possible implementation, the network device is an HSS. When the second terminal queries the address information of the first terminal, there is a problem of routing query signaling. Because the first terminal may be a mobile terminal, the first terminal may access a mobile network at a roaming location. However, the second terminal does not know whether the first terminal is roaming, and cannot know a location of a network accessed when the first terminal roams. Because the address information of the first terminal is registered in an HSS to which the first terminal belongs, the second terminal can obtain, through querying, the address information of the first terminal only from the HSS to which the first terminal belongs. Therefore, the query request sent by the second terminal needs to be routed to the HSS to which the first terminal belongs. Specifically, referring to FIG. 1B, the second terminal may send the query request to an MME or an SGSN to which the second terminal belongs. The MME or the SGSN to which the second terminal belongs determines, based on the terminal identifier of the first terminal, the HSS to which the first terminal belongs, and forwards the query request to the HSS to which the first terminal belongs, so that the HSS to which the first terminal belongs returns the address information of the first terminal.

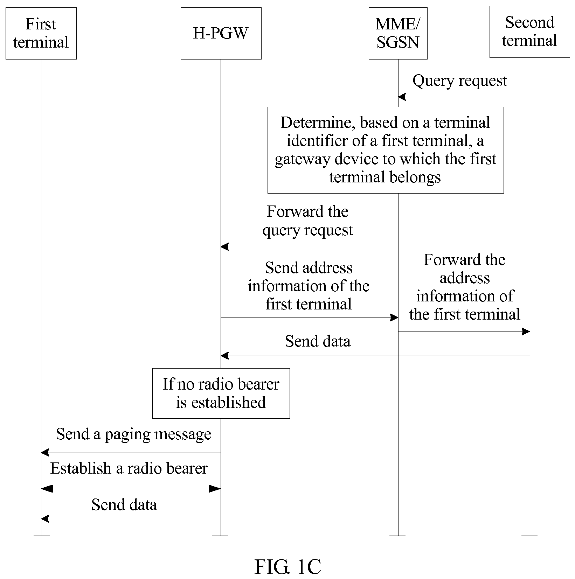

In a second possible implementation, the network device is a gateway device. Similarly, there is also a problem of routing query signaling herein. Because the second terminal can obtain, through querying, the address information of the first terminal only from a gateway device to which the first terminal belongs, the query request needs to be routed to the gateway device to which the first terminal belongs. Specifically, the second terminal first sends the query request to an MME or an SGSN to which the second terminal belongs and that is responsible for a forwarding function, and the MME or the SGSN determines an address of the gateway device of the first terminal based on the terminal identifier of the first terminal, and forwards the query request to the gateway device. For example, referring to FIG. 1C, the gateway device to which the first terminal belongs is an H-PGW (Home Packet Data Network Gateway, home packet data network gateway). The MME or the SGSN determines an address of the H-PGW based on the terminal identifier of the first terminal, and forwards the query request to the H-PGW.

In a third possible implementation, if the network device is a specified management device, the second terminal may send the query request to the specified management device. Generally, the specified management device is usually a pre-configured device. The device has a special network domain name, and a DNS server is queried based on the network domain name, to obtain an IP address of the specified management device. The network domain name of the specified management device may be pre-configured on the second terminal. The second terminal obtains the IP address of the specified management device by automatically loading the network domain name, and sends the query request to the IP address of the specified management device. For example, referring to FIG. ID, the network device is a NAM, and the second terminal sends the query request to the NAM.

104. When the network device receives the query request sent by the second terminal, the network device obtains the address information of the first terminal from the pre-stored correspondence among a terminal identifier, an application identifier, and address information based on the terminal identifier of the first terminal and the application identifier of the application, where the query request carries the terminal identifier of the first terminal and the application identifier of the application.

As described above, the network device pre-stores the correspondence among the terminal identifier of the first terminal, the application identifier of the application, and the address information of the first terminal. When receiving the query request of the second terminal, the network device obtains the address information of the first terminal from the pre-stored correspondence among the terminal identifier, the application identifier, and the address information based on the terminal identifier of the first terminal and the application identifier of the application to perform communication that are carried in the query request.

For example, if a phone number of the first terminal is 189XXXX0520, and the application identifier is APP 1, it may be determined that the IP address of the first terminal is 192.168.1.24, and the port number is 8021.

105. The network device sends the address information of the first terminal to the second terminal.

The network device sends the address information to the second terminal after obtaining the address information of the first terminal based on the terminal identifier of the first terminal and the application identifier of the application. In actual transmission, data is usually transmitted in a form of a packet, and the packet includes at least source address information and destination address information. The source address information is used to indicate a sending party of the packet, and the destination address information is used to indicate a receiving party of the packet. Therefore, when receiving the query request sent by the second terminal, the network device may obtain address information of the second terminal by using the source address information, and the network device may send the address information of the first terminal to the second terminal based on the address information of the second terminal.

Similarly, depending on different network devices, the address information of the first terminal may be sent by the HSS to which the first terminal belongs, may be sent by the gateway device to which the first terminal belongs, or may be sent by the specified management device.

106. When the second terminal receives the address information of the first terminal, the second terminal sends data to the first terminal based on the address information of the first terminal.

107. The first terminal receives the data.

In a possible implementation, the application on the first terminal is in a running state. In this case, the first terminal may directly receive the data sent by the second terminal, so as to implement a data transmission service based on an IP address assigned in a packet switched domain.

In another possible implementation, the application on the first terminal is not in a running state. In this case, the first terminal receives a paging message sent by the gateway device to which the first terminal belongs, enables, based on application information carried in the paging message, an application corresponding to the application information, and establishes a connection to the gateway device. The gateway device to which the first terminal belongs forwards the data to the first terminal, and the first terminal receives the data, so as to implement a data transmission service based on an IP address assigned in a packet switched domain.

According to the method provided in this embodiment of the present invention, the query request that is of the second terminal and that carries the terminal identifier of the first terminal and the application identifier is received, and the address information of the first terminal is obtained and returned based on the pre-stored correspondence among a terminal identifier, an application identifier, and address information, so that the second terminal can directly send the data to the first terminal based on the address information of the first terminal, so as to avoid a handshake procedure between the second terminal and an application server, thereby reducing network signaling load.

It should be noted that, in an actual application process, data may need to be forwarded by the gateway device during transmission. When the data passes through the gateway device, NAT (Network Address Translation, network address translation) is required, in other words, translation between an external IP address and an internal IP address is performed. Therefore, actually, to ensure that the second terminal communicates with the first terminal, the IP address that is of the first terminal and that is registered on the network device may be an external IP address obtained after the NAT. In this case, the second terminal sends the data to the gateway device based on the external IP address, and the gateway device forwards the data to the first terminal. Further, to ensure accuracy of data transmission, the first terminal may further have a pair of port numbers, namely, an internal network port number and an external network port number, so that the external network port number is mapped to the internal network port number during the NAT, and the gateway device transmits the received data to the first terminal based on the internal IP address and the internal network port number. As described above, specific transmission is actually diversified. Therefore, how to implement a specific transmission step is not limited in this embodiment of the present invention.

The following is an apparatus embodiment of the present invention, and the apparatus embodiment may be used to execute the method embodiment of the present invention. For details not disclosed in the apparatus embodiment of the present invention, refer to the method embodiment of the present invention.

FIG. 2 is a block diagram of a data transmission apparatus according to an example embodiment. The data transmission apparatus may be implemented by using software, hardware, or a combination thereof. The data transmission apparatus may include:
a sending module 210, configured to send a query request to a network device, where the query request carries a terminal identifier of a first terminal and an application identifier of an application to perform communication; and
a receiving module 220, configured to receive address information of the first terminal, where the address information of the first terminal is obtained by the network device based on the terminal identifier of the first terminal and the application identifier of the application, where
the sending module 210 is further configured to send data to the first terminal based on the address information of the first terminal.

The apparatus provided in this embodiment of the present invention sends, to the network device, the query request that carries the terminal identifier of the first terminal and the application identifier, so that the network device obtains and returns the address information of the first terminal based on a pre-stored correspondence among a terminal identifier, an application identifier, and address information, and the apparatus can directly send the data to the first terminal based on the address information of the first terminal, so as to avoid a handshake procedure that is often required between the apparatus and an application server, thereby reducing network signaling load.

Based on the apparatus provided above, in a possible implementation, the network device includes a home subscriber server HSS, a gateway device, or a specified management device provided by a third party.

In another possible implementation, the sending module 210 is configured to:
when the network device is an HSS, send the query request to a mobility management entity MME or a serving general packet radio service GPRS support node SGSN to which the second terminal belongs, where the MME or the SGSN determines, based on the terminal identifier of the first terminal that is carried in the query request, an HSS to which the first terminal belongs, and forwards the query request to the HSS to which the first terminal belongs.

In another possible implementation, the sending module 210 is configured to:
when the network device is a gateway device, send the query request to an MME or an SGSN to which the second terminal belongs, where the MME or the SGSN determines, based on the terminal identifier of the first terminal that is carried in the query request, a gateway device to which the first terminal belongs, and forwards the query request to the gateway device to which the first terminal belongs.

The sending module 210 may be a transmitter or a transceiver, the receiving module 220 may be a receiver or a transceiver, and the sending module 210 and the receiving module 220 may be integrated together to constitute a transceiver module, which is a transceiver in terms of hardware implementation.

FIG. 3A is a block diagram of a data transmission apparatus according to another example embodiment. The data transmission apparatus may be implemented by using software, hardware, or a combination thereof. The data transmission apparatus may include:
a receiving module 310, configured to receive a query request sent by a second terminal, where the query request carries at least a terminal identifier of a first terminal and an application identifier of an application to perform communication;
an obtaining module 320, configured to obtain address information of the first terminal from a pre-stored correspondence among a terminal identifier, an application identifier, and address information based on the terminal identifier of the first terminal and the application identifier of the application; and
a sending module 330, configured to send the address information of the first terminal to the second terminal, where the address information of the first terminal is used by the second terminal to send data to the first terminal.

The apparatus provided in this embodiment of the present invention receives the query request that is sent by the second terminal and that carries the terminal identifier of the first terminal and the application identifier, and obtains and returns the address information of the first terminal based on the pre-stored correspondence among a terminal identifier, an application identifier, and address information, so that the second terminal can directly send the data to the first terminal based on the address information of the first terminal, so as to avoid a handshake procedure that is often required between the second terminal and an application server, thereby reducing network signaling load.

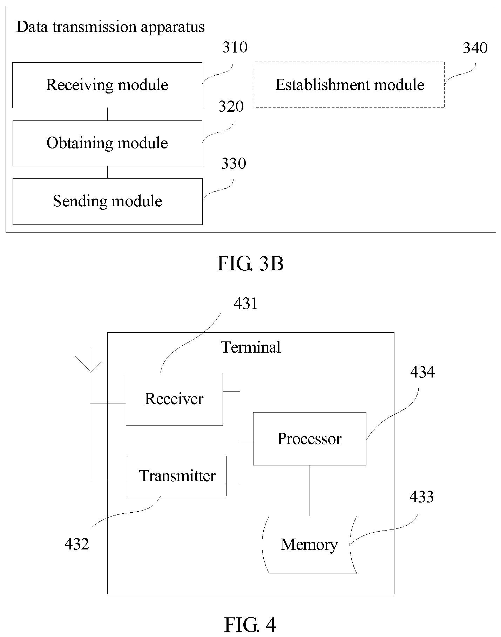

Based on the apparatus provided above, referring to FIG. 3B, in a possible implementation, the receiving module 310 is further configured to receive an address registration request, where the address registration request carries the address information of the first terminal, the application identifier of the application, and the terminal identifier of the first terminal.

The apparatus further includes:
an establishment module 340, configured to establish and save a correspondence among the address information of the first terminal, the application identifier of the application, and the terminal identifier of the first terminal.

In another possible implementation, the receiving module 310 is configured to:
receive an address registration request sent by the first terminal; or
receive an address registration request sent by a mobility management entity MME; or
receive an address registration request sent by a gateway device.

The sending module 330 may be a transmitter or a transceiver, the receiving module 310 may be a receiver or a transceiver, and the sending module 330 and the receiving module 310 may be integrated together to constitute a transceiver module, which is a transceiver in terms of hardware implementation. The obtaining module 320 and the establishment module 340 may be built in or independent of a processor of a network device in a hardware form, or may be stored in a memory of a network device in a software form, so that the processor invokes and performs operations corresponding to the foregoing modules. The processor may be a central processing unit (CPU), a microprocessor, a single-chip microcomputer, or the like.

It should be noted that when the data transmission apparatus provided in the foregoing embodiment implements the data transmission method, division of the foregoing function modules is merely used as an example for description. In actual application, the foregoing functions may be allocated to different function modules for implementation based on an actual requirement. In other words, an internal structure of a device is divided into different function modules to implement all or some of the functions described above. In addition, for the apparatus in the foregoing embodiment, a specific manner in which each module performs an operation has been described in detail in the related method embodiment, and details are not described herein.

FIG. 4 is a block diagram of a terminal 400 according to an example embodiment. The terminal 400 can implement the data transmission method provided in the present invention. The terminal includes a transmitter 432, a receiver 431, a memory 433, and a processor 434 separately connected to the transmitter 432, the receiver 431, and the memory 433. The processor 434 is configured to:
send a query request to a network device by using the transmitter 432, where the query request carries a terminal identifier of a first terminal and an application identifier of an application to perform communication, the terminal identifier of the first terminal and the application identifier of the application are used by the network device to obtain and return address information of the first terminal, and the network device is configured to store a correspondence among a terminal identifier, an application identifier, and address information;
receive, by using the receiver 431, the address information of the first terminal; and
send, by using the transmitter 432 based on the address information of the first terminal, data stored in the memory 433 to the first terminal.

In an embodiment of the present invention, the network device includes a home subscriber server HSS, a gateway device, or a specified management device provided by a third party.

In an embodiment of the present invention, the processor 434 is further configured to:
when the network device is an HSS, send, by using the transmitter 432, the query request to a mobility management entity MME or a serving general packet radio service GPRS support node SGSN to which the second terminal belongs, where the MME or the SGSN determines, based on the terminal identifier of the first terminal that is carried in the query request, an HSS to which the first terminal belongs, and forwards, by using the transmitter 432, the query request to the HSS to which the first terminal belongs.

In an embodiment of the present invention, the processor 434 is further configured to:
when the network device is a gateway device, send, by using the transmitter 432, the query request to an MME or an SGSN to which the second terminal belongs, where the MME or the SGSN determines, based on the terminal identifier of the first terminal that is carried in the query request, a gateway device to which the first terminal belongs, and forwards, by using the transmitter 432, the query request to the gateway device to which the first terminal belongs.

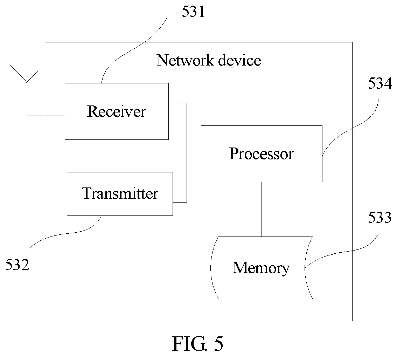

FIG. 5 is a block diagram of a network device according to an example embodiment. The network device can implement the data transmission method provided in the present invention. The network device includes a transmitter 532, a receiver 531, a memory 533, and a processor 534 separately connected to the transmitter 532, the receiver 531, and the memory 533. The processor 534 is configured to perform the following steps:
receive, by using the receiver 531, a query request sent by a second terminal, where the query request carries at least a terminal identifier of a first terminal and an application identifier of an application to perform communication;
obtain, based on the terminal identifier of the first terminal and the application identifier of the application, address information of the first terminal from a correspondence that is among a terminal identifier, an application identifier, and address information and that is pre-stored in the memory 533; and
send, by using the transmitter 532, the address information of the first terminal to the second terminal, where the address information of the first terminal is used by the second terminal to send data to the first terminal.

In an embodiment of the present invention, the processor 534 is further configured to:
receive, by using the receiver 531, an address registration request, where the address registration request carries the address information of the first terminal, the application identifier of the application, and the terminal identifier of the first terminal; and
establish and save a correspondence among the address information of the first terminal, the application identifier of the application, and the terminal identifier of the first terminal.

In an embodiment of the present invention, the processor 534 is further configured to:
receive, by using the receiver 531, an address registration request sent by the first terminal; or
receive, by using the receiver 531, an address registration request sent by a mobility management entity MME; or
receive, by using the receiver 531, an address registration request sent by a gateway device.

A person skilled in the art can easily figure out another implementation solution of the present invention after considering the specification and practicing the present invention that is disclosed herein. This application is intended to cover any variations, functions, or adaptive changes of the present invention. These variations, functions, or adaptive changes comply with general principles of the present invention, and include common knowledge or a commonly used technical means in the technical field that is not disclosed in the present invention. The specification and the embodiments are merely considered as examples, and the actual scope and the spirit of the present invention are pointed out by the following claims.

It should be understood that this disclosure is not limited to the accurate structures that are described in the foregoing and that are shown in the accompanying drawings, and modifications and changes may be made without departing from the scope of the present invention. The scope of the present invention is limited only by the appended claims.

## Claims

1. A data transmission method, wherein the method is applied to a network device and the method comprises:
receiving a query request sent by a second terminal, wherein the query request carries at least a terminal identifier of a first terminal and an application identifier of an application to perform communication;
obtaining address information of the first terminal from a pre-stored correspondence among a terminal identifier, an application identifier, and address information based on the terminal identifier of the first terminal and the application identifier of the application; and
sending the address information of the first terminal to the second terminal, wherein the address information of the first terminal is used by the second terminal to send data to the first terminal.

2. The method according to claim 1, wherein before the receiving a query request sent by a second terminal, the method further comprises:
receiving an address registration request, wherein the address registration request carries the address information of the first terminal, the application identifier of the application, and the terminal identifier of the first terminal; and
establishing and saving a correspondence among the address information of the first terminal, the application identifier of the application, and the terminal identifier of the first terminal.

3. The method according to claim 2, wherein the receiving an address registration request comprises:
receiving an address registration request sent by the first terminal; or
receiving an address registration request sent by a mobility management entity MME; or
receiving an address registration request sent by a gateway device.

4. A data transmission method, wherein the method is applied to a second terminal and the method comprises:
sending a query request to a network device, wherein the query request carries a terminal identifier of a first terminal and an application identifier of an application to perform communication;
receiving address information of the first terminal, wherein the address information of the first terminal is obtained by the network device based on the terminal identifier of the first terminal and the application identifier of the application; and
sending data to the first terminal based on the address information of the first terminal.

5. The method according to claim 4, wherein the network device comprises a home subscriber server HSS, a gateway device, or a specified management device provided by a third party.

6. The method according to claim 5, wherein if the network device is an HSS, the sending a query request to a network device comprises:
sending the query request to a mobility management entity MME or a serving general packet radio service GPRS support node SGSN to which the second terminal belongs, wherein the MME or the SGSN determines, based on the terminal identifier of the first terminal that is carried in the query request, an HSS to which the first terminal belongs, and forwards the query request to the HSS to which the first terminal belongs.

7. The method according to claim 5, wherein if the network device is a gateway device, the sending a query request to a network device comprises:
sending the query request to an MME or an SGSN to which the second terminal belongs, wherein the MME or the SGSN determines, based on the terminal identifier of the first terminal that is carried in the query request, a gateway device to which the first terminal belongs, and forwards the query request to the gateway device to which the first terminal belongs.

8. A network device, wherein the network device comprises a transmitter, a receiver, a memory, and a processor separately connected to the transmitter, the receiver, and the memory, and the processor is configured to:
receive, by using the receiver, a query request sent by a second terminal, wherein the query request carries at least a terminal identifier of a first terminal and an application identifier of an application to perform communication;
obtain, based on the terminal identifier of the first terminal and the application identifier of the application, address information of the first terminal from a correspondence that is among a terminal identifier, an application identifier, and address information and that is pre-stored in the memory; and
send, by using the transmitter, the address information of the first terminal to the second terminal, wherein the address information of the first terminal is used by the second terminal to send data to the first terminal.

9. The network device according to claim 8, wherein the processor is further configured to:
receive, by using the receiver, an address registration request, wherein the address registration request carries the address information of the first terminal, the application identifier of the application, and the terminal identifier of the first terminal; and
establish and save a correspondence among the address information of the first terminal, the application identifier of the application, and the terminal identifier of the first terminal.

10. The network device according to claim 9, wherein the processor is further configured to:
receive, by using the receiver, an address registration request sent by the first terminal; or
receive, by using the receiver, an address registration request sent by a mobility management entity MME; or
receive, by using the receiver, an address registration request sent by a gateway device.

11. A terminal, wherein the terminal comprises a transmitter, a receiver, a memory, and a processor separately connected to the transmitter, the receiver, and the memory, and the processor is configured to:
send, by using the transmitter, a query request to a network device, wherein the query request carries a terminal identifier of a first terminal and an application identifier of an application to perform communication;
receive, by using the receiver, address information of the first terminal, wherein the address information of the first terminal is obtained by the network device based on the terminal identifier of the first terminal and the application identifier of the application; and
send, by using the transmitter based on the address information of the first terminal, data stored in the memory to the first terminal.

12. The terminal according to claim 11, wherein the network device comprises a home subscriber server HSS, a gateway device, or a specified management device provided by a third party.

13. The terminal according to claim 12, wherein the processor is further configured to:
when the network device is an HSS, send, by using the transmitter, the query request to a mobility management entity MME or a serving general packet radio service GPRS support node SGSN to which the second terminal belongs, wherein the MME or the SGSN determines, based on the terminal identifier of the first terminal that is carried in the query request, an HSS to which the first terminal belongs, and forwards, by using the transmitter, the query request to the HSS to which the first terminal belongs.

14. The terminal according to claim 12, wherein the processor is further configured to:
when the network device is a gateway device, send, by using the transmitter, the query request to an MME or an SGSN to which the second terminal belongs, wherein the MME or the SGSN determines, based on the terminal identifier of the first terminal that is carried in the query request, a gateway device to which the first terminal belongs, and forwards, by using the transmitter, the query request to the gateway device to which the first terminal belongs.
